Europäisches Patentamt

European Patent Office

Office européen des brevets

(11) Publication number : **0 503 914 A2**

# (12) EUROPEAN PATENT APPLICATION

(21) Application number : 92302062.2

(51) Int. Cl.⁵ : **G01N 21/27, G02F 1/13**

(22) Date of filing : **11.03.92**

(30) Priority : **15.03.91 US 669791**

(43) Date of publication of application :
**16.09.92 Bulletin 92/38**

(84) Designated Contracting States :
**AT BE CH DE DK ES FR GB GR IT LI LU MC NL
PT SE**

(71) Applicant : **Biotrack, Inc.
1058 Huff Avenue
Mountain View California 94043 (US)**

(72) Inventor : **Yassinzadeh, Zia
654 Argus Way
Santa Clara, California 95054 (US)**
Inventor : **Carey, Brian R.
915 Bubb Road
Cupertino, California 95014 (US)**

(74) Representative : **Harrison, David Christopher
et al
MEWBURN ELLIS 2 Cursitor Street
London EC4A 1BQ (GB)**

(54) Electronic control cartridge and method of simulating light transmission patterns.

(57)   The invention provides devices and methods for electronically simulating a standard absorbance value in an analytical instrument that measures absorbance of light in order to verify the correct operation of the instrument. A liquid-crystal/polarizing-filter combination located in the light pathway normally occupied by sample is used, along with sufficient voltage changes to selectively block and transmit light through the liquid crystal, thereby causing a light detector in the analytical instrument to read transmitted and blocked values of light. A calculation then is used to determine whether proper operation of the instrument has occurred. Different absorbance values, as well as different patterns of varying transmission (such as exponential decay), can be simulated by causing the liquid crystal to switch from absorbance to transmission (or vice versa) at different times.

EP 0 503 914 A2

This invention is directed to methods of carrying out quality control operations in analytical devices that use transmission of light through a sample to analyze the sample and to devices used to carry out the quality control operations.

Quality control is an important part of any diagnostic assay; without good quality control, for example, an analytical instrument can give an incorrect result after sample analysis that can have harmful or even fatal effects on the patient being tested.

The proper operation of analytical instruments has traditionally been verified by carrying out an assay using a standard, usually involving "wet chemistry;" i.e., preparation of a standard sample (often by addition of deionized water to a dried standard sample) and manipulation of the standard sample in the same manner that an ordinary sample is manipulated.

U.S. Patent No. 4,948,961 describes an entirely electronic control cartridge that is capable of simulating the flow of a particle-containing fluid through an internal chamber of an analysis cartridge that is insertable into an analytical instrument. The control cartridge contains no moving parts or chemicals, and the desired simulation occurs when an operator pushed a button on the cartridge after the control cartridge is inserted into the analytical instrument in the same location where the analysis cartridge is normally inserted.

This cartridge mimics the flickering pattern seen by the analytical instrument when particles in the sample (such as red cells in blood) interrupt and scatter a light beam that passes through the analytical cartridge. The noise (AC component) of the voltage registered at the light detector in an indicator of the passage of particles. The analytical cartridge exemplified in the patent was used to determine how rapidly blood clotted; clotting caused blood to stop flowing through the cartridge, thereby producing a steady voltage in the detector (no AC component).

The control cartridge described in the patent simulated fluid flow by alternately blocking and allowing passage of light at the same location when the control cartridge is inserted in the monitor. The control cartridge contained a liquid crystal cell located between the light source and detector along with a polarizing filter in close proximity to the liquid crystal. Because of the polarizing effects of the liquid crystal, it was possible to block passage of light through the combination of the polarizing filter and the liquid crystal cell or to allow light to pass through the combination, depending on the voltage applied to the liquid crystal at any given time. Accordingly, when the voltage was modulated, light passing through the combination to the detector was alternately blocked and transmitted, thereby simulating the flickering pattern caused by particles flowing through a chamber of an analytical cartridge. After a preselected time (equivalent to clotting time for a standard blood sample), the voltage modulation was stopped, thereby causing the monitor to report a standard clotting time.

This control cartridge was used to determine the proper operation of the analytical instrument into which the cartridge was inserted. For example, it is possible to determine whether the light source and detector are properly aligned and whether the electronics present in the instrument for determining an analytical result provide a correct analytical result in response to a pre-determined change in the flickering pattern that is programmed into the control cartridge.

The technique described above uses the on-off characteristics of the liquid-crystal/polarizing-filter combination. Unfortunately, it is difficult to directly utilize the same combination in a situation where it is desired to only partially block light to a specific degree. For example, investigators in the laboratories of the present inventors have produced a number of analytical instruments that measure absorbance of light by traditional spectrophotometry. When quality control is required in such situations, liquid-crystals/polarizing-filter combinations have previously been too expensive for most commercial applications, since manufacturing tolerances in standard liquid crystals are such that a particular voltage applied to different liquid crystals (even from the same manufacturing batch) will result in different polarization angles and thus different amounts of light being blocked by the combination. Each control cartridge had to be adjusted for a different liquid-crystal voltage, driven by a different duty cycle, or adjusted to provide a different angle between the polarizing planes of the filter and liquid crystal (or some combination thereof) in order to reach the same level of light transmission, and even then rotation of light by the liquid crystal varies with temperature, which makes fine control difficult as the cartridge warms up during use.

Accordingly, in the past it has been necessary to carry out "wet chemistry" on a standard sample in order to determine whether monitors that use standard light transmission patterns were operating properly. However, the cartridges prepared in the laboratories of the inventors are designed to be disposable, and this requires that an analytical cartridge be used up. Additionally, standard solutions must be made up, and other time-consuming operations of "wet-chemistry" quality control make such testing more time consuming and less desirable than if an entirely electronic cartridge were available. Accordingly, it is desirable to provide a quality control device and method utilizing a liquid-crystal/polarizing filter combination to simulate specific transmission of light through a liquid in a reproducible and efficient manner.

It is an object of the invention to provide a method and device that utilize a liquid-crystal/polarizing-filter combination to simulate transmission of light through a liquid that contains a substance that absorbs a portion of the light.

It is a further object of the invention to provide a method and apparatus capable of using a liquid-crystal/polarizing-filter combination strictly in on-off modes to simulate different absorbances of light, thereby eliminating variations in light absorbance caused by manufacturing differences between liquid crystals and by temperature changes.

These and other objects of the invention that will hereinafter become more readily apparent have been accomplished by providing a method for electronically simulating a light transmission standard in an analytical instrument that uses an absorbance reading derived from interaction of a substance located in a cartridge inserted in said instrument with a light beam that forms part of a detection system in said instrument to obtain an analytical value, which comprises:

interposing a liquid-crystal/polarizing-filter combination in said light beam;

obtaining at least one of a transmission-level or blocked-level light transmission reading using said detection system, wherein said transmission-level reading is obtained when said light beam passes through said liquid-crystal/polarizing-filter combination while said liquid crystal is biased for full transmission of light and said blocked-level reading is obtained when said liquid crystal is biased for full blockage of light; and

determining whether said light transmission reading or a value calculated using said light transmission reading is within a predetermined range of acceptable values, thereby checking the correct operation of said instrument.

Figure 1 is a graph showing transmission of a typical liquid-crystal/polarizing filter combination versus voltage applied to the liquid crystal.

Figure 2 is a block diagram of an electronic circuit suitable for use in an embodiment of the invention.

Figure 3 is a graph showing a typical kinetic reaction of the type that can be mimicked by a control device of the invention.

Figure 4 is a graph used in exemplifying one technique for manipulating data obtained from a control cartridge of the invention.

Figure 5 is a graph illustrating a second technique for manipulating data obtained with a control cartridge of the invention.

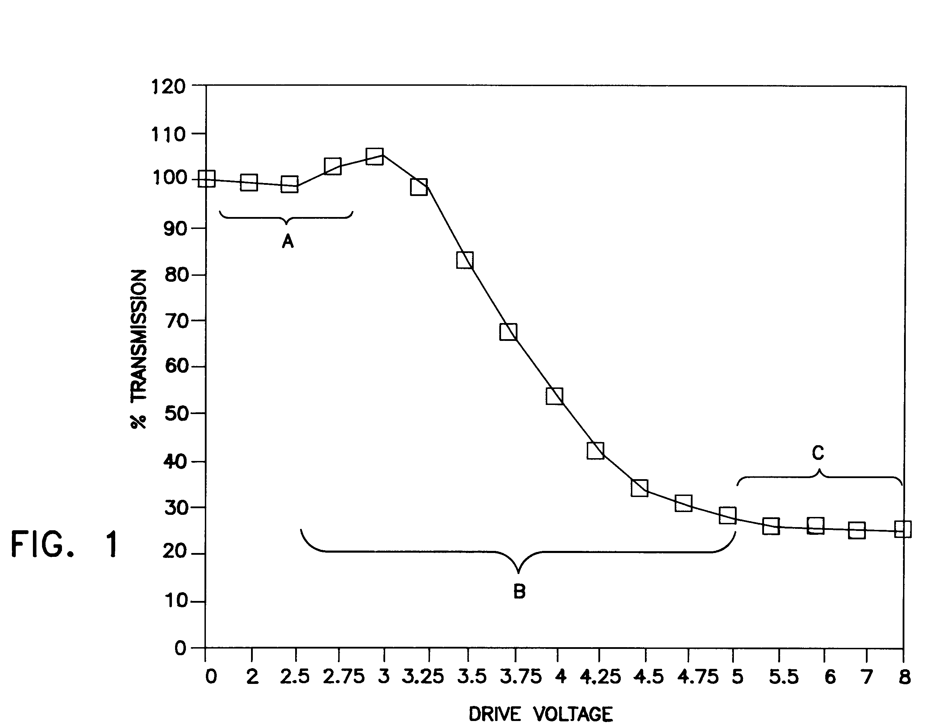

This invention provides devices and methods for electronically simulating a standard absorbance value or pattern of absorbance (such as increase or decrease over time) in an analytical instrument that measures absorbance of light in order to verify the correct operation of the instrument. A liquid-crystal/polarizing-filter combination located in the light pathway normally occupied by sample is used. Voltage applied to the liquid crystal, rather than being selected to provide an intermediate transmission of light, is selected to either not rotate or to fully rotate light that passes through the liquid crystal, thereby causing a light detector in the analytical instrument to read either fully transmitted or fully blocked values of light transmission. It will be recognized that "fully" transmitted or blocked refers to the maximum extent available for the particular liquid-crystal/polarizing-filter combination, as will be apparent from the discussion of Figure 1 below.

There are two major aspects to the present invention, a method and a device. The method of the invention involves using the indicated liquid-crystal/polarizing-filter combination to produce either (or both) fully transmitted or fully blocked light readings taken through the combination and then using the resulting readings obtained by the detection system in the monitor to provide either a standard single reading of light transmission or a light transmission pattern, such as a decrease or increase in transmitted light over time. Using single readings (or sets of readings), a single absorbance/transmittance value can be simulated (absorbance = 1/transmittance). Using multiple readings of blocked or transmitted light, a number of different light patterns can be simulated. The final pattern (or individual transmission) value obtained by the monitor, called an instrument validation value, is then checked against a pre-determined range of acceptable values, and the operator of the system is informed of the result, thereby verifying the correct operation of the detection system and the instrument. It is preferred to cause the detection system in the monitor to obtain the light transmission readings through a device external to the analytical instrument itself, particularly a control cartridge that is adapted to fit into the same location as an analytical cartridge used in the analytical instrument. This control cartridge represents the device aspect of the invention.

By using the method described above, it is possible to simulate a number of different types of standard wet-chemistry readings obtained in the instrument merely by varying the duration and pattern of light transmission through the liquid-crystal/polarizing-filter combination. Thus, a insertable electronic cartridge, or a built-in quality control system, can be used in place of wet chemistry methods previously used for measuring the absorbance of light through standard samples.

An analytical instrument that is used with an insertable analytical cartridge for spectroscopic analysis will contain a detector and a light source located in the instrument so that light from the source will pass through the appropriate location in the analytical cartridge for measuring the presence or absence of analyte in a sample contained in the cartridge. Such an instrument can be designed for a specific purpose and thus may generate or detect only a narrow portion of the electromagnetic spectrum, or the instrument can be capable of measuring light at different wavelengths. Such instruments are referred to as spectrophotometers, and the present invention can be used with any such instrument. The simplest analytical cartridge is a simple container for liquids (such as a cuvette). More complex analytical cartridges include those described in U.S. Patent 4,968,129 and U.S. Patent Application Serial No. 07/117,791, filed November 5, 1987 (now allowed).

The present invention generally provides a control cartridge that replaces the analytical cartridge that is normally used in the spectrophotometer; the control cartridge contains a liquid crystal at the location in the cartridge through which light would normally pass. The liquid crystal material is selected so as to rotate polarized light that passes through it, the typical means by which liquid crystals operate. A polarizing filter will be present either in the cartridge itself or in the analytical apparatus into which the cartridge is inserted (usually in the cartridge). It is also possible to include both the liquid crystal and the polarizing filter in the monitor (e.g., biased for normal transmission so that readings can be made through an analytical cartridge and the liquid-crystal/polarizing-filter combination) so that no control cartridge is required. The control cartridge will be organized so light passes through both the polarizing filter and the liquid crystal. The rotational orientation of the polarizing filter and liquid crystal relative to each other is selected so that passage of light through the combination can be blocked or transmitted as different voltages are applied to the liquid crystal cell.

A graph showing typical light transmission versus applied voltage for a typical liquid-crystal/-polarizing-filter combination is shown in Figure 1. In this example the filter and liquid crystal are rotationally oriented so that maximum light passes through the combination at an applied voltage of zero. As can be seen in Figure 1, the slope of the graph at low voltages is essentially zero (region A of Figure 1), indicating that a threshold voltage must be reached before light transmission will vary. A middle portion of the graph at intermediate voltages (region B) shows a change in light transmission with voltage. Eventually, a maximum rotation region is reached which exhibits little change as voltage increases further (region C). Liquid crystals that exhibit a maximum light rotation of about 90 degrees will give the greatest difference between fully blocked and fully transmitted states when used with a single polarizing filter. However, other rotations are satisfactory when maximum differences between transmission states are not required. Alternatively, the liquid-crystal/polarizing-filter combination can consist of two individual filters set 0 degrees or 90 degrees relative to each other, with a liquid crystal between the two filters. Since liquid crystals do not rotate light in the absence of an applied voltage, the 0-degrees combination will pass light in the absence of an applied voltage and block light when a voltage is applied. The 90-degrees combination will block light in the absence of an applied voltage and pass light when a voltage is applied. Other liquid-crystal/polarizing-filter combinations that provide the desired transmission and blocked states can also be used.

Liquid crystals are normally operated not by applying a continuous voltage (although this can be done) but by applying a stepped voltage function to the liquid crystal. For example, a square wave alternating between 0 and 5 volts can be applied to a liquid crystal. The normal operating frequency for any given liquid crystal varies with the filter and is indicated by the manufacturer. Additionally, the amount of time that a liquid crystal spends in either state (e.g., 0 V or 5 V) can be varied. For example, during a 1-second period at 50 Hz, 5-volt steps having a duration of 10 msec will result in a total time of 500 msec being spent at 5 V. Since the liquid crystal spends half of its time in an "on" state, this is referred to as a "duty cycle" of 50%. If the 5-volt step lasts only 1 msec (50 msec total), the duty cycle will be 5%. If desired, the on/off states of liquid crystals can be controlled by varying the duty cycle instead of varying the applied voltage. For example, if the horizontal axis in Figure 1 represents the duty cycle rather than the applied voltage, a similar graph is obtained. A low duty cycle (e.g., 0-5%) will have virtually no effect on transmission, an intermediate duty cycle (e.g., 6-40%) will cause variable amounts of light to be transmitted, and a high duty cycle (e.g., 41-100%) will cause the maximum rotation of the liquid crystal material and thus the maximum blockage of light. Such factors for controlling the transmission of light through liquid crystals are well understood by those skilled in the art.

A low-viscosity liquid crystal having a high refractive index change (thereby enabling complete blockage of light and a rapid transition) is desirable. Liquid crystals are commercially available, and commercial liquid crystal, such as the Vikay LCD #I1113701), can be used without modification.

Any polarizing filter that provides polarized light is satisfactory. In this specification "polarizing filter" includes all means for producing polarized light, whether or not in the form of a normal light filter. In most cases an actual filter will be used, by which is meant a material that is transparent to light in the desired rotational plane while absorbing light in other rotational planes. Actual filters will usually be used whenever the polarizing filter is part of a control cartridge in which the filter intercepts and polarizes incident un-polarized light produced by the monitor. However, reflective surfaces that produce polarized light as well as primary sources of polarized light can also be used (e.g., when some or all of the components are designed into the monitor rather than being present in a control cartridge).

A typical control cartridge would also contain electronic circuitry and, in preferred embodiments, a self-contained power supply, such as a battery (either primary or rechargeable), in order to supply the desired voltage at the desired times. External power sources attached to the control device with flexible wires or by other means are also possible.

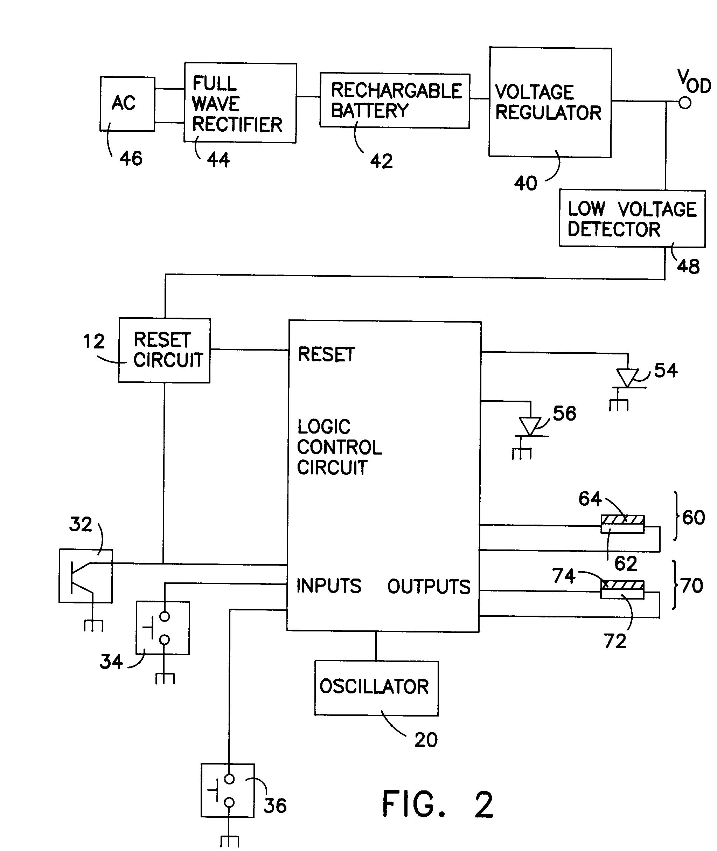

Figure 2 shows typical electronic circuitry that can be utilized to control the liquid crystal and thus the entire quality control system. Circuitry includes a logic control circuit 10, which can be a state machine using combinational logic or a programmable microcontroller. A clock 20 (e.g., based on a crystal oscillator) can be included to synchronize any desired operations, either internally in the control system or in conjunction with operations in the monitor. For example, various analytical-cartridge/monitor combinations using light-emitting diodes (LEDs) and light sensors or solenoid-controlled motions can coordinate operation of the analytical cartridge and monitor. Sensors can be provided in a control cartridge that are activated by systems in the monitor (or vice versa) to coordinate operation of the control cartridge and the monitor so that the control cartridge mimics the operation of an analytical cartridge and carries out any necessary switching of voltages at a time appropriate for producing the desired value in the monitor.

As shown in Figure 2, light sensor 32 in the control cartridge detects a monitor-initiated event and signals reset controller 10 so that the operating sequence can take place at the proper time. The various electronic operations are powered by a regulated power supply 40. The embodiment shown uses a rechargeable battery 42. A full-wave rectifier 44 is provided so that external AC current can be used to recharge the battery. A low-voltage detector 48 senses the supply voltage and disables the reset circuit 12 if the battery charge is too low. Messages indicating correct or incorrect operation of any step can be displayed by the monitor or control cartridge.

Two user-activated switches (34 and 36) are provided in the control cartridge embodiment as shown to allow simulation of two different standard samples; e.g., a "high normal" control sample (34) and a "low normal" control sample (36). Output signals can be provided (e.g., LEDs 54 and 56 under control of the controller) to indicate to the user which of the switches was activated.

In a typical operation, a user-activated switch (e.g., 34 or 36) is closed to simulate the application of a sample to the cartridge. Either the activation of the switch itself or a later event that occurs after other operations of the monitor have been checked as a result of the activation of the first switch causes the liquid-crystal/polarizing-filter combination 60 to switch from one light transmitting state to the other. Combination 60 consists of liquid crystal 62 and polarizing filter 64. In the embodiment shown in Figure 2, activation of switch 34 or 36 causes a second liquid crystal display 70 to darken. This second LCD consists of liquid crystal 72 and polarizing filter 74. When LCD 70 darkens, a detector in the monitor (not shown) receives less light than previously, simulating the addition of a sample to the device. The monitor thus "thinks" that a sample has been added to an analytical cartridge, which stimulates the monitor to go through various operations, including (for example) turning on a light-emitting diode (LED; not shown) in the monitor at an appropriate time, thereby activating photodetector 32 and coordinating operations between the control cartridge and the monitor.

Numerous variations will be evident to one of skill in the art. For example, the reset circuit can be triggered by switch 34 which causes logic control circuit 10 to signal the monitor directly in a single step to coordinate activities. For example, LED 54 can be detected by the monitor, thereby coordinating the monitor and the control cartridge. Alternatively, the initial delivery of voltage to LCD 60 can be used as a triggering event.

The oscillator, controller, and liquid crystal display drivers required to carry out the invention can be implemented in CMOS technology using standard techniques of electronic fabrication. A CMOS device can be readily powered through more than 10,000 cycles when powered by a NiCd rechargeable battery. However, other types of electronic components, such as TTL, can be used to achieve the same results.

Although the present invention can be used to simulate a standard transmission value that does not change (such as might be obtained in an end-point analysis in a spectrophotometer), the quality control cartridge is more desirably utilized to mimic a changing absorbance value. After all, a simple standard absorbance filter can be used to produce a single absorbance value. However, such a simple filter would not be capable of mimicking a pattern of changing light transmission/absorbance. For example, many chemical reactions are analyzed not by end-point analysis but by measuring the kinetics of the reaction. In such cases it is not a specific value that matters but the rate at which an absorbance value changes. The quality control device of the present invention allows substantially any pattern of light transmission to be mimicked.

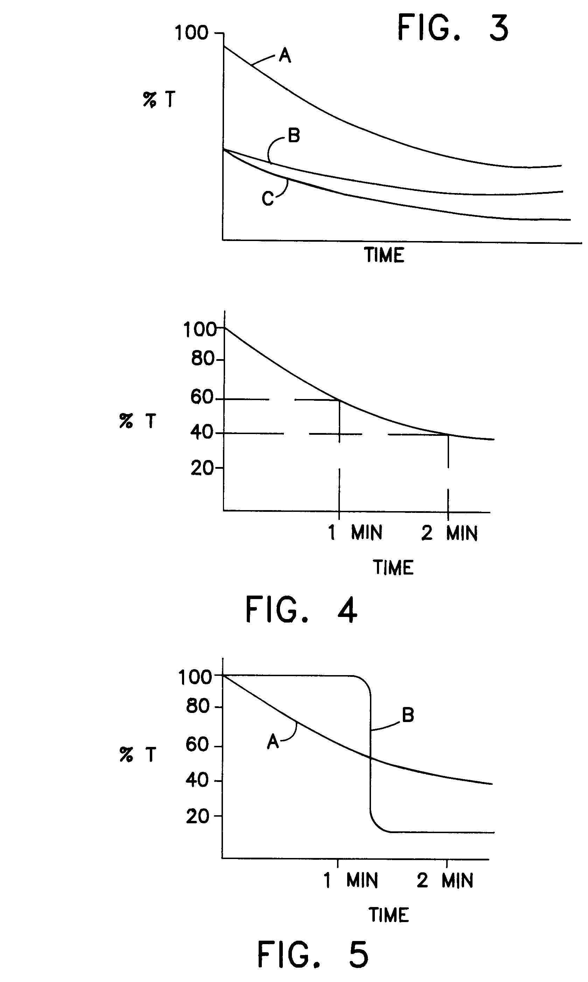

As an example, Figure 3 shows a series of typical light patterns that might be seen for analysis of a sample by a kinetic reaction. The three lines (A, B, and C) represent absorbances obtained at the indicated times after initiation of the same analytical reaction with three different samples. As is typical when dealing with analytical samples, the properties of the individual samples vary. For example, if the indicated samples are blood samples, the hematocrits can differ between samples. As shown in Figure 3 the addition of samples B and C to reaction medium immediately produces a darker sample (less light transmitted) than sample A, as would be expected for samples having a higher hematocrit. In the reaction shown in Figure 3, the samples get darker as a result of a reaction occurring between a reagent mixed with the sample and the analyte in the sample. However, the mere indication that samples B and C produced darker end points at the relevant wave length of light is not an indication that sample B or C contains more of the analyte than sample A, since sample B and C were already darker than sample A when the initial reaction mixture was formed. In such cases, it is the change (and often the rate of change) of light transmission that is used in determining the actual amount of analyte present in the sample. In Figure 3, since sample A exhibited the greatest rate of change, sample A has the greater amount of analyte present.

Numerous techniques exist for programming monitors so as to accurately measure the kinetics of a reaction. A number of examples are given here for programming a cartridge so as to interact properly with a monitor to simulate a standard reaction (i.e., to simulate a standard curve). However, it will be realized that different programming can occur depending on the nature of the monitor and that the following examples are exemplary rather than being exclusionary.

Figure 4 shows one way in which a kinetic reaction can be mimicked. This Figure is a graph of time versus percent transmission and shows absorbance increasing (transmission decreasing) with time. Line A represents a standard curve. A monitor makes readings of transmitted light at predetermined time intervals after initiation. In this example, 1-minute intervals are used. While it is possible to take a single reading at a given time, most monitors take a number of readings over a short interval at the indicated time and average the results or otherwise manipulate them to reduce errors. In one typical configuration, 7 readings are taken at 57, 58, 59, 60, 61, 62, and 63 seconds. Similar readings would be taken at the 2-minute reading. The readings are then averaged after throwing out the high and low reading in order to eliminate electronic noise. Thus, when a standard, wet-chemistry sample is analyzed in an analytical cartridge that produces a percent transmission as shown by line A, 60% transmission is present at 1 second and 40% transmission is present at 2 seconds (relative to the initial 100% transmission).

This pattern can be simulated by proper triggering of the liquid-crystal/polarizing-filter combination in an electronic control cartridge to block or transmit light for an appropriate fraction of the time. Thus, a fully transmitting reading would be taken at time 0 to establish 100% transmission, while 4 of the 7 readings at 1 minute and 3 of the 7 readings at 2 minutes would be fully transmitting with the remaining readings being fully blocked. After throwing out high and low values in each set, 3 out of 5 (60%) transmission would be present at 1 minute and 2 out of 5 (40%) transmission would be present at 2 minutes, thus mimicking the standard transmission.

While the example of the preceding paragraph is capable of producing only 6 different transmission readings (100, 80, 60, 40, 20, and 0%), it will be recognized that larger numbers of readings will enable finer control over the percent transmission (e.g., 110 readings taken, with throwing out the 5 high and the 5 low readings, would leave 100 different readings to be manipulated, allowing selection of transmission levels differing by about 1%).

It will be apparent that individual percent transmission values can be obtained in the manner described above (e.g., 60% at one minute), as well as multiple readings. No further manipulation is required when only a single value is being obtained (as in a end-point analysis). When a kinetic measurement is being made, however, the individual values will be mathematically manipulated in order to determine the kinetic rate using standard techniques of mathematical analysis of rates, such as calculation of the "slope" (i.e., rate of change) between adjacent measurement points. A detailed example of such an analysis is described below.

In addition to providing individual absorbance values at selected time intervals as described above in connection with Figure 4, an averaged reading over a longer time can also be used as shown in Figure 5. The graph axis and curve A in Figure 5 are the same as those in Figure 4. However, line B represents transmission through a quality control cartridge that is operated for a relatively long time at full transmission and then switched to a fully blocking state. It is possible to mathematically manipulate such a step function so that a mathematically generated curve mimics standard curve A. This option allows the use of liquid crystals with slower switching times rather than requiring liquid crystals that can switch rapidly from the on to the off state. Such an example is described in detail below. In a typical technique for analyzing a slow, single switching step, a least-squares regression analysis is applied to the original data (after it has been converted to logarithmic values) in order to produce a single slope for the entire curve. Since the slope of a line is related to the rate of change of the graphed parameters, this slope can be used in the kinetic analysis.

The invention now being generally described, the same will be better understood by reference to the following detailed example of a specific embodiment, which is provided for purposes of illustration only and is not to be considered limiting of the invention unless so specified.

EXAMPLE

An electronic control cartridge was prepared for use with a system that determines concentration of an analyte (e.g., theophylline) in blood. The analytical cartridge used in this system is described in U.S. Application Serial No. 07/663,217 (Attorney Docket No. BIOT-033/00 US), filed March 1, 1991. The control cartridge is physically similar to the analytical cartridge (approximately 2/3 the size of a normal audio tape cassette) but is constructed with electronic components and a liquid-crystal/polarizing-filter combination. The liquid-crystal/polarizing-filter combination is located in the control cartridge in the same relative location as the analysis chamber in the analytical cartridge.

The electronic cartridge is controlled by a 4 bit microcontroller (NEC uPD75P66). The time base of the microcontroller is provided by a Pierce oscillator using a 500-kHz crystal, 27-pF capacitors, and a 22-k resistor. The power is derived from four rechargeable Ni-Cd batteries (Varta DK11) connected in series. A 5-V regulator (National LP2951) keeps the supply constant and warns of low batteries (ERR-). ERR- pulls the reset low when the batteries are low. A phototransistor (Telefunken BPW16) and a pull-down resistor are connected to the reset input. The phototransistor detects activation of an LED in the monitor and thus causes a reset.

The microcontroller has four inputs (CIN0-CIN3) which are compared to a VREF input. VREF is set at 2.5 V by a voltage divider from the supply. Two of these inputs are user accessible switches connected between the supply and pull down resistors. This allows the user to select which of two possible analytical values is going to be simulated. The other two inputs are switches activated by solenoids in the monitor. This allows the electronic control cartridge to synchronize with the activity of the monitor.

Two open-drain outputs of the microcontroller are connected to LEDs (HLMP-S501) and current limit resistors. These LEDs flash once per second to indicate that the cartridge is operating and which switch was selected. Four other open-drain outputs are connected to pull-up resistors (port 11, bits 0-3). One LCD is connected from bit 0 to bit 1. Another is connected from bit 2 to bit 3. Additional LCDs may be placed in parallel with either of these two, if needed. Normally, both output bits connected to the LCD are high, there is 0 V across the LCD, and the LCD remains clear. When it is necessary to make the LCD dark, both bits are alternately switched high and low at 61.035 Hz (500 kHz/$2^{13}$) with a 50% duty cycle. The two bits must be complements of each other (180 degrees out of phase) such that the LCD experiences a 10 V p-p square wave voltage signal.

The LCDs themselves are Vikay LCD #I137-01. A sheet of polarizing filter (Da-lite Pola-Glare™) is glued to both faces of the LCD. The direction of polarization of the two sheets should be perpendicular to each other. With no voltage applied, the LCD twists the direction of polarization such that light passes through both filters. When an alternating voltage is applied to the LCD as described, the LCD no longer twists the light and the second polarizer blocks the light passed by the first polarizer.

The monitor used performs its assay by shining light from an LED through the location in the cartridge occupied by the liquid-crystal/polarizing-filter combination (occupied by the analysis chamber in the corresponding analytical cartridge). On the opposite side of the cartridge, there are a photodetector and a resistor circuit whose output voltage is proportional to the light level. At the appropriate point in time, triggered by the operation of the cartridge, the monitor reads this voltage ten time with one second between each reading. The LCD always remains transparent during the time the first five readings are done. If the first of the two user selectable switches had been pressed earlier, the microcontroller causes the LCD to become dark between the fifth and sixth readings. The LCD remains dark until the end of the assay. If the second switch had been selected, the LCD remains clear until after the ninth reading and is made dark before the tenth.

The monitor's microprocessor now has ten raw data points from which it calculates the rate of change of optical absorbance. The rate is then converted to the analyte concentration in μg/ml using a third order calibration polynomial stored in the monitor's memory.

The entire calculation consists of a number of separate steps. The log of each data point is taken. This constitutes a set of ten Y-axis values. The slope of the least squares line of Log(volts) vs. (time)$^{0.7}$ is then determined. The corresponding set of ten X-axis values is $\{1, 2^{0.7}, 3^{0.7}, ...\}$, since the readings were done at one second intervals. The slope of the least squares line is then given by the following formula:

$$m = \frac{\sum_{i=1}^{10} \left( x_i y_i \right) - \frac{1}{10} \left( \sum_{i=1}^{10} x_i \right) \left( \sum_{i=1}^{10} y_i \right)}{\sum_{i=1}^{10} x_i^2 - \frac{1}{10} \left( \sum_{i=1}^{10} x_i \right)^2}$$

Since all Xi are known a priori, Σxi and the entire denominator are constants for this application. This slope, m,

7

is converted to the final answer by the following polynomial:

$$\mu g/ml = A + Bm + Cm^2 + Dm^3$$

The coefficients A, B, C, and D are stored in the monitors memory and calibrate a rate reading with the current analytical cartridge lot to the correct drug concentration. The coefficients are empirically determined for each analytical cartridge lot, according to the properties of the reagents, which vary slightly from lot to lot. This concentration is then displayed by the monitor.

All publications and patent applications mentioned in this specification are herein incorporated by reference to the same extent as if each individual publication or patent application was specifically and individually indicated to be incorporated by reference.

The invention now being fully described, it will be apparent to one of ordinary skill in the art that many changes and modifications can be made thereto.

## Claims

1. A method for electronically simulating a light transmission standard in an analytical instrument that uses an absorbance reading derived from interaction of a substance located in an analytical cartridge inserted in said instrument with a light beam that forms part of a detection system in said instrument to obtain an analytical value, which comprises:

    interposing a liquid-crystal/polarizing-filter combination in said light beam;

    obtaining at least one of a transmission-level or blocked-level light transmission reading using said detection system, wherein said transmission-level reading is obtained when said light beam passes through said liquid-crystal/polarizing-filter combination while said liquid crystal is biased for full transmission of light and said blocked-level reading is obtained when said liquid crystal is biased for full blockage of light; and

    determining whether said light transmission reading or a value calculated using said light transmission reading is within a predetermined range of acceptable values, thereby checking the correct operation of said instrument.

2. The method of Claim 1, wherein both a blocked-level and a transmission-level reading are obtained.

3. The method of Claim 1, wherein more than one blocked-level or transmission-level reading is obtained.

4. The method of Claim 3, wherein more than one blocked-level reading and more than one transmission-level reading are obtained.

5. The method of Claim 3, wherein a selected group of light transmission readings is used to calculate a validation value for comparison to said standard.

6. The method of Claim 5, wherein first and second validation values are calculated from different selected groups of said readings.

7. The method of Claim 1, wherein at least a part of said liquid-crystal/polarizing-filter combination is present in a control cartridge insertable into said analytical instrument so that said liquid-crystal/-polarizing-filter combination occupies a location in said instrument occupied by a sample when an analytical cartridge is present in said instrument.

8. The method of Claim 7, wherein said liquid crystal is located in said control cartridge and said polarizing filter is located in said analytical instrument.

9. The method of Claim 7, wherein said liquid crystal and said polarizing filter are both located in said control cartridge.

10. The method of Claim 9, wherein said control cartridge further comprises a power supply and a control circuit capable of supplying biasing voltage to said liquid crystal so that said light is blocked at said blocked-level reading and transmitted at said transmitted-level reading.

11. The method of Claim 10, wherein said control circuit comprises a timing control circuit located in said control cartridge which applies two different voltages to said liquid crystal at first and second predetermined times after said control circuit is activated.

12. The method of Claim 11, wherein only one voltage change occurs after said control circuit is activated.

13. The method of Claim 11, wherein said control cartridge further comprises a contact switch which initiates activation of said timing control circuit.

14. The method of Claim 13, wherein said contact switch is activated by a human user of said analytical instrument.

15. The method of Claim 1, wherein said standard is a single transmission value.

16. The method of Claim 1, wherein said standard is a varying transmission pattern.

17. The method of Claim 16, wherein said varying transmission pattern is a continuous increase or decrease in light transmission.

18. A control device capable of simulating a standard pattern of transmission of light through a liquid sample, said pattern being measured in an analytical instrument which utilizes an insertable analysis cartridge containing an internal chamber containing said liquid sample, which comprises:
    a control cartridge adapted for insertion in said instrument in place of said analytical cartridge;
    a liquid crystal located in said control cartridge so as to interpose between a light source and a light detector in said analytical instrument;
    means for polarizing light impinging on said liquid crystal so as to alternately transmit and block passage of polarized light between said light source and said light detector when two different voltages, one of which can be zero, are applied to said liquid crystal;
    a timing control circuit located in said control cartridge which applies said two voltages to said liquid crystal at predetermined times after said control circuit is activated, wherein said timing control means causes said analytical instrument to read a change in transmission of light with time.

19. The device of Claim 18, wherein only one voltage change occurs after said control circuit is activated.

20. The control device of Claim 18, wherein said control device further comprises a power supply.

21. The control device of Claim 18, wherein said timing control circuit is activated by an event occurring is said analytical instrument.

22. The device of Claim 18, wherein said polarized light is produced by a polarizing filter in said analytical instrument.

23. The method of Claim 18, wherein said polarized light is produced by a polarizing filter in said control cartridge.

FIG. 1

EP 0 503 914 A2

FIG. 2

FIG. 3

FIG. 4

FIG. 5